# EUROPEAN PATENT APPLICATION

(11) **EP 1 502 680 A1**
(43) Date of publication of application: **02.02.2005**
(21) Application number: 03701817.3
(22) Date of filing: 21.01.2003
(51) Int. Cl.: B22F 1/00, C22C 27/02, H01G 9/042

(54) **NIOBIUM POWDER AND SOLID ELECTROLYTIC CAPACITOR**

(30) Priority: 21.01.2002 JP 2002011824
(71) Applicant: Kawatetsu Mining Co., LTD., Tokyo 111-0051 (JP)
(72) Inventor: SATO, Nobuyuki, KAWATETSU MINING CO., LTD, Chiba 260-0826 (JP); EBATO, Osamu, KAWATETSU MINING CO., LTD, Chiba 260-0826 (JP); SAITO, Kan, KAWATETSU MINING CO., LTD, Chiba 260-0826 (JP); KIRIHARA, Tadasu, KAWATETSU MINING CO., LTD, Chiba 260-0826 (JP)
(74) Representative: Henkel, Feiler & Hänzel
(86) International application number: PCT/JP2003/000459
(87) International publication number: WO 2003/061881

(57) **Abstract**

By adding a slight amount component to a niobium powder, the leakage current of a solid electrolytic capacitor is reduced and the capacitance thereof is improved, and thereby a solid electrolytic capacitor large in the capacitance and small dielectric loss tangent is manufactured. Specific resolution means are as follows. With a niobium powder that contains 1 ppm or more and 600 ppm or less of hydrogen; 1 ppm or more and 200 ppm or less of carbon; or 1 ppm or more and 50 ppm or less of nickel, and the balance substantially made of niobium as a raw material, a sintered body thereof is formed as an anode in a solid electrolytic capacitor 10.

## Description

### Technical Field

The present invention relates to a composition of a niobium powder and a solid electrolytic capacitor that is made with the niobium powder.

### Background Art

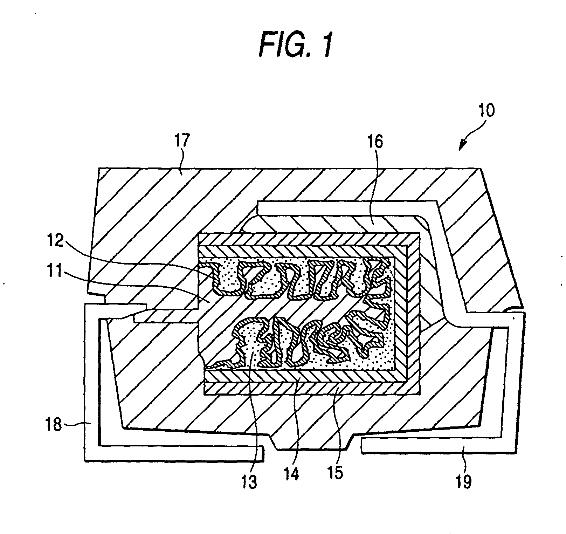

In recent years, as an anode of a solid electrolytic capacitor having a high capacitance, niobium is gathering attention. In Fig. 1, a longitudinal sectional view of a solid electrolytic capacitor is schematically shown. A solid electrolytic capacitor 10 has a structure in which niobium 11, niobium oxide 12, a solid electrolyte 13, graphite 14 and silver 15 are laminated. A manufacturing process of the solid electrolytic capacitor 10 is as follows. Niobium powder is sintered at a temperature in the range of substantially from 1000 to 1400 degree centigrade and thereby a porous sintered body is manufactured. Thereafter, the porous sintered body is subjected to an anodic oxidation, and thereby niobium oxide 12 is formed on a surface of niobium 11. Subsequently, the solid electrolyte 13, graphite 14 and silver 15 are formed. Further subsequently, an anode 18 (external terminal) is connected to niobium 11 and a cathode 19 (external terminal) is connected through a conductive adhesive 16 to silver 15. Finally, a resin mold 17 is applied followed by subjecting to an aging process, and thereby a solid electrolytic capacitor is manufactured.

So far, for niobium powder that is used for solid electrolytic capacitors, as described in JP-A Nos.64-73009 and 6-25701, high purity niobium powder has been demanded. It has been considered that in general the higher the purity, the better. JP-A No.64-73009 does not disclose specific numerical values of the purity. JP-A No.6-25701 describes that an oxygen content is less than 100 ppm or less than 5000 ppm, a total content of nonoxide impurities is less than 200 ppm or less than 5000 ppm. However, there is no specific mentioning to names of the nonoxide impurities and of contents thereof.

On the other hand, JP-A No.2000-226607 discloses that when a particular element is added to niobium powder, capacitance as an anode can be increased. That is, it is described that "One kind or more of dopants selected from known elements such as nitrogen, phosphorus, boron, sulfur, silicon, fluorine, yttrium, magnesium, and so on are added. These elements work as an inhibitor in the course of sintering niobium powder and increase the capacitance of an anode, and furthermore improve quality of a niobium oxide film. These elements are added, with argon gas or hydrogen gas as a carrier gas, as a simple body or a compound that can be reduced by hydrogen. An amount that is added is generally 1000 ppm or less with respect to niobium." However, kinds, amounts and specific effects of the additives are not quantitatively disclosed.

### Disclosure of Invention

The present invention intends to provide a niobium powder suitable for manufacturing a solid electrolytic capacitor, by containing an appropriate amount of hydrogen, carbon or nickel. The present invention also intends to provide a solid electrolytic capacitor which is small in the leakage current and large in the capacitance, by using the above niobium powder.

There has been no disclosure of hydrogen, carbon or nickel being contained in a conventional niobium powder. The present inventors found that when an appropriate amount of hydrogen, carbon or nickel was contained in a niobium powder, the above object could be attained, and thereby the present invention was completed. That is, a first invention of the present invention is a niobium powder characterized by containing 1 ppm or more and 600 ppm or,less of hydrogen and the balance substantially made of niobium. When the content of hydrogen is less than 1 ppm, the leakage current is large and the capacitance cannot be sufficiently increased; accordingly, the content is provided to be 1 ppm or more. In the range of from 1 to 600 ppm, the leakage current is slight and the capacitance exhibits the maximum value. When the content of hydrogen exceeds 600 ppm, on the contrary, the leakage current increases and the capacitance decreases; accordingly, the upper limit is set at 600 ppm.

A second invention of the present invention is a niobium powder characterized by containing 1 ppm or more and 200 ppm or less of carbon and the balance substantially made of niobium. When the content of carbon is less than 1 ppm, the leakage current is large and the capacitance is not sufficient; on the other hand, when the content of carbon exceeds 200 ppm, the leakage current increases and the capacitance decreases; accordingly, the upper limit is set at 200 ppm.

A third invention of the present invention is a niobium powder characterized by containing 1 ppm or more and 50 ppm or less of nickel and the balance substantially made of niobium. When the content of nickel is less than 1 ppm, the leakage current is large and the capacitance is not sufficient; on the other hand, when the content of nickel exceeds 50 ppm, by contrast, the leakage current increases and the capacitance decreases; accordingly, the upper limit is set at 50 ppm.

A fourth invention of the present invention is a niobium powder characterized by containing two kinds or more selected from 1 ppm or more and 600 ppm or less of hydrogen; 1 ppm or more and 200 ppm or less of carbon; and 1 ppm or more and 50 ppm or less of nickel, and the balance substantially made of niobium.

Furthermore, a fifth invention of the present invention provides a solid electrolytic capacitor characterized in that with any one of a niobium powder characterized by containing 1 ppm or more and 600 ppm or less of hydrogen; a niobium powder characterized by containing 1 ppm or more and 200 ppm or less of carbon; a niobium powder characterized by containing 1 ppm or more and 50 ppm or less of nickel; or a niobium powder characterized by containing two kinds or more selected from 1 ppm or more and 600 ppm or less of hydrogen, 1 ppm or more and 200 ppm or less of carbon and 1 ppm or more and 50 ppm or less of nickel, and the balance substantially made of niobium as a raw material, a sintered body is formed as an anode in the capacitor.

So far known niobium powders have a small average particle diameter of primary particles, for instance, less than 50 nm (0.050 µm) or from 50 to 150 nm (0.050 to 0.150 µm). When such fine niobium powder is sintered to form an anode, there is a disadvantage in that since particles are too small for a sintered body, in the anodic oxidation step, niobium is consumed in forming an oxide film, resulting in a decrease in an amount of niobium that is not oxidized. Accordingly, an electrode area decreases and a super-high capacity capacitor cannot be obtained. In this connection, in the first through third inventions according to the invention, an average particle diameter of primary particles is preferably set at more than 0.150 µm and 2 µm or less. When the niobium particles are too large, in obtaining a sintered body, the sintering proceeds with difficulty. The primary particles here mean particles that are not agglomerated and can be identified as simple particles under SEM observation. The average particle diameter means a particle diameter at 50 % cumulative number in a cumulative particle size distribution curve.

### Brief Description of the Drawing

Fig. 1 is a schematic sectional view of a solid electrolytic capacitor.

### Best Mode for Carrying Out the Invention

In the following, modes for carrying out the present invention will be explained.

With a niobium powder, according to a method described below, a solid electrolytic capacitor was prepared, and the leakage current and capacitance thereof were measured. A niobium wire of φ 0.5 mm that is used in an anode was embedded in 0.2 g of niobium powder followed by press molding, and thereby a pellet was prepared. A load at the press was from 50 to 150 MN/m², and a bulk density of a pressed body was set in the range of from 2800 to 3200 kg/m³. The prepared pellet was sintered under the conditions of a pressure inside of a furnace of 1 × 10⁻³ Pa or better and a temperature in the range of from 1000 to 1400 degree centigrade. After the sintering, a sample was immersed in an aqueous solution of 0.8 % by mass of phosphoric acid followed by applying a voltage of 20 V for 6 hr, and thereby a niobium oxide film was formed on a surface of the pellet. Thereafter, with an aqueous solution of 40 % by mass of sulfuric acid, the leakage current and the capacitance of the niobium capacitor were measured. The leakage current was measured as a current value after 5 minutes at a measurement voltage of 14 V. The capacitance was measured under the condition of a bias voltage of 1.5 V.

The niobium powder for use in solid electrolytic capacitors can be manufactured according to the reduction of niobium pentachloride with magnesium, sodium or hydrogen; the reduction of niobium fluoride with sodium; or the reduction of niobium oxide with carbon or aluminum.

In the following, with reference to embodiments, the present invention will be specifically explained.

### (Embodiments 1 through 3, Comparative embodiments 1 and 2)

A niobium powder was prepared by the hydrogen reduction of niobium pentachloride. The niobium powder was heated in a hydrogen gas atmosphere at 1100 degree centigrade with the processing time varying, and thereby an amount of hydrogen introduced in the niobium powder was controlled. An amount of introduced hydrogen was measured with a thermal conduction type gas analyzer. Thereafter, a capacitor was prepared as mentioned above, and values of the leakage current and the capacitance were measured. Results are shown in Table 1. When the content of hydrogen is in the range of from 1 to 600 ppm, the leakage current is small and the capacitance is large. Outside of the range, results are no good.

### (Embodiments 4 and 5, Comparative embodiments 3 and 4)

A niobium powder was prepared by the reduction of niobium oxide with aluminum. By variously changing an amount of naphthalene being added to the niobium powder and by heating at 1100 degree centigrade for a predetermined time period, an amount of carbon introduced into the niobium powder was controlled. An amount of carbon was measured with a combustion infrared absorption analyzer. Thereafter, a capacitor was prepared as mentioned above, and values of the leakage current and the capacitance were measured. Results are shown in Table 2. When the content of carbon is in the range of from 1 to 200 ppm, the leakage current is small and the capacitance is large. When the content of carbon is less than 1 ppm and more than 200 ppm, the leakage current becomes larger and the capacitance smaller.

### (Embodiments 6 and 7, Comparative embodiments 5 and 6)

A niobium powder was prepared by reduction of niobium oxide with aluminum. By variously changing an amount of nickel carbonyl being added to the niobium powder and by heating at 1100 degree centigrade for a predetermined period of time, an amount of nickel introduced into the niobium powder was controlled. An amount of nickel was measured with an inductively coupled plasma mass spectrometer. Thereafter, as mentioned above, a capacitor was prepared, and values of the leakage current and the capacitance were measured. Results are shown in Table 3. When the content of nickel is in the range of from 1 to 50 ppm, the leakage current is small and the capacitance is large; that is very good. When the content is outside of this range, the performance deteriorates.

### Industrial Applicability

According to the present invention, when a particular component is contained by a predetermined amount in a niobium powder, a solid electrolytic capacitor small in the leakage current and large in the capacitance can be obtained.

**Table 1**

| | Content of hydrogen (ppm) | Leakage current (µA/µF) | Capacitance (µFV/g) | Average particle diameter of primary particles (µm) |
|---|---|---|---|---|
| Comparative embodiment 1 | 0.5 | 0.015 | 70,500 | 0.5 |
| Embodiment 1 | 5 | 0.0088 | 75,000 | 0.7 |
| Embodiment 2 | 200 | 0.0083 | 76,000 | 0.5 |
| Embodiment 3 | 550 | 0.0087 | 75,500 | 0.6 |
| Comparative embodiment 2 | 700 | 0.018 | 69,000 | 0.6 |

**Table 2**

| | Content of carbon (ppm) | Leakage current (µA/µF) | Capacitance (µFV/g) | Average particle diameter of primary particles (µm) |
|---|---|---|---|---|
| Comparative embodiment 3 | 0.5 | 0.015 | 70,500 | 0.3 |
| Embodiment 4 | 3 | 0.0080 | 77,000 | 0.4 |
| Embodiment 5 | 180 | 0.0087 | 78,000 | 0.4 |
| Comparative embodiment 4 | 250 | 0.020 | 73,500 | 0.4 |

**Table 3**

| | Content of nickel (ppm) | Leakage current (µA/µF) | Capacitance (µFV/g) | Average particle diameter of primary particles (µm) |
|---|---|---|---|---|
| Comparative embodiment 5 | 0.5 | 0.012 | 70,000 | 0.4 |
| Embodiment 6 | 2 | 0.0088 | 75,000 | 0.4 |
| Embodiment 7 | 40 | 0.0086 | 75,000 | 0.4 |
| Comparative embodiment 6 | 60 | 0.028 | 65,000 | 0.5 |

## Claims

1. A niobium powder **characterized in** containing 1 ppm or more and 600 ppm or less of hydrogen and the balance substantially made of niobium.

2. A niobium powder **characterized in** containing 1 ppm or more and 200 ppm or less of carbon and the balance substantially made of niobium.

3. A niobium powder **characterized in** containing 1 ppm or more and 50 ppm or less of nickel and the balance substantially made of niobium.

4. A niobium powder **characterized by** containing two kinds or more selected from 1 ppm or more and 600 ppm or less of hydrogen; 1 ppm or more and 200 ppm or less of carbon; and 1 ppm or more and 50 ppm or less of nickel, and the balance substantially made of niobium.

5. A solid electrolytic capacitor **characterized by** forming a sintered body with a niobium powder set forth in any one of claims 1 through 4 as a raw material inside of a capacitor as an anode.
